# EUROPEAN PATENT APPLICATION

(11) **EP 3 654 403 A1**
(43) Date of publication of application: **20.05.2020**
(21) Application number: 18832709.2
(22) Date of filing: 22.06.2018
(51) Int. Cl.: H01M 2/08, F16J 15/10, H01M 10/04

(54) **GASKET FOR SECONDARY BATTERY**

(30) Priority: 12.07.2017 JP 2017136589
(71) Applicant: NOK Corporation, Minato-ku Tokyo 105-8585 (JP)
(72) Inventor: YANAGI Tokunori, Makinohara-shi Shizuoka 421-0532 (JP); TSUCHIDA Hiroshi, Anjo-shi Aichi 446-0057 (JP); SAITO Kazushi, Makinohara-shi Shizuoka 421-0532 (JP)
(74) Representative: Global IP Europe Patentanwaltskanzlei
(86) International application number: PCT/JP2018/023867
(87) International publication number: WO 2019/012961

(57) **Abstract**

A secondary battery gasket for use between stack members stacked on one another at varying intervals (tightening margins) allows the stack members to have appropriate sealing surfaces and achieve stable sealing performance, and minimizes the increase in the sealing width when a sealant is compressed. A gasket (1) for a secondary battery placeable between stack members (201) of a secondary battery includes a flat frame (2) shaped to extend along sealing target portions on peripheries of the stack members, and an annular sealant (4) bonded to a sealing edge of the frame and made of elastic material. The annular sealant (4) includes an annular sealing bead (4a) extending along an entire length of the sealing edge (3) and having a thickness greater than an interval between adjacent stack members (201). The sealing bead (4a) has at least one annular recess (4b) along the entire length of the sealing edge (3).

## Description

### FIELD

The present invention relates to a gasket for a secondary battery.

### BACKGROUND

In a stacked secondary battery including many cell stacks on one another, each cell stack includes a positive electrode plate and a negative electrode plate as flat stack members, and a separator placed between the electrode plates. The spaces between the electrode plates and the separator are filled with an active material. The stack members are clamped together in the stacking direction with bolts and nuts, for example.

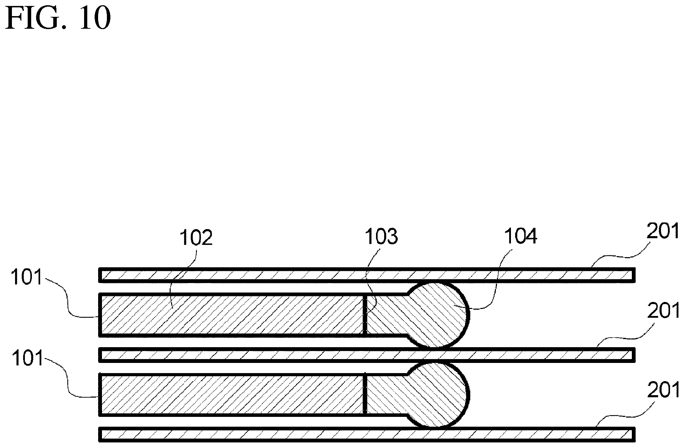

As shown in FIG. 10, gaskets 101 are arranged between the stack members 201 at the peripheries of the stack members 201. Each gasket 101 includes, for example, a frame 102 and a sealant 104 bonded to a sealing edge (inner periphery) 103 of the frame 102 (refer to, for example, Japanese Patent Application Publication No. 2011-238364).

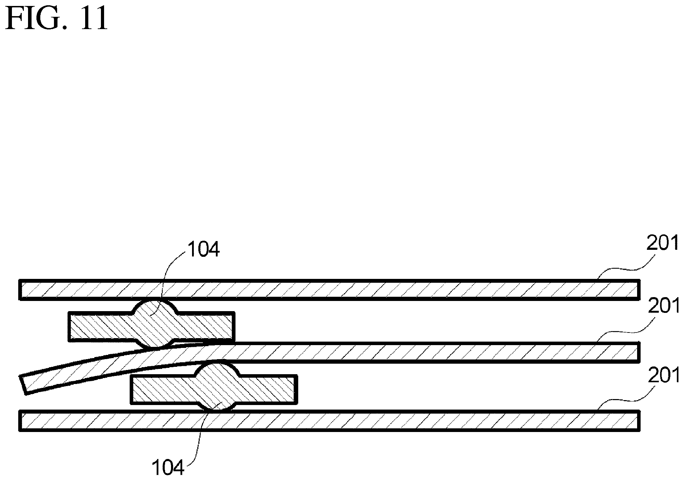

As shown in FIG. 11, the sealants 104 between the stack members 201 that are stacked on one another can be misaligned, and the stack members 201 can have misaligned sealing surfaces. Such stack members (thin metal films) 201 can bend and have inappropriate tightening margins. The gaskets 101 with frames allow sealants 104 to be initially positioned with high accuracy. These gaskets 101 can have sealing surfaces without misalignment when the stack members 201 are stacked on one another and the sealants 104 are compressed, and thus provide appropriate tightening margins without causing the stack members 201 to bend.

### BRIEF SUMMARY

### TECHNICAL PROBLEM

Known framed gaskets 101 used with the stack members 201 stacked on one another at varying intervals (tightening margins) cannot have appropriate sealing surfaces, and thus cannot achieve stable sealing performance.

Increasing the thickness of the sealants 104 to form sealing surfaces may increase the sealing width when the sealants 104 are compressed, and cause the sealants 104 to enter the area for the active material and decrease the effective areas of the electrode plates.

One or more aspects of the present invention are directed to a secondary battery gasket for use between stack members stacked on one another at varying intervals (tightening margins) to allow the stack members to have appropriate sealing surfaces and achieve stable sealing performance, and to minimize the increase in the sealing width when a sealant is compressed.

### SOLUTION TO PROBLEM

One or more aspects of the embodiment provides a gasket for a secondary battery placeable between stack members of a secondary battery, the gasket including:
a flat frame shaped to extend along sealing target portions on peripheries of the stack members; and
an annular sealant bonded to a sealing edge of the frame, the annular sealant being made of elastic material, the annular sealant including an annular sealing bead extending along an entire length of the sealing edge and having a thickness greater than an interval between adjacent ones of the stack members, the sealing bead having at least one annular recess along the entire length of the sealing edge.

### ADVANTAGEOUS EFFECTS

The gasket for a secondary battery according to the above embodiments of the present invention allows stack members stacked on one another at varying intervals (tightening margins) to have appropriate sealing surfaces and to achieve stable sealing performance, and to minimize the increase in the sealing width when a sealant is compressed.

### BRIEF DESCRIPTION OF DRAWINGS

FIG. 1 is a cross-sectional view of gaskets for a secondary battery according to a first embodiment.
FIG. 2A is a cross-sectional view of a gasket for a secondary battery according to the first embodiment, and FIG. 2B is a cross-sectional view of a known gasket for a secondary battery.
FIG. 3 is a cross-sectional view of the gaskets for a secondary battery according to the first embodiment in use.
FIG. 4 is a cross-sectional view of gaskets for a secondary battery with two annular recesses.
FIG. 5 is a cross-sectional view of gaskets for a secondary battery with three annular recesses.
FIG. 6 is a cross-sectional view of gaskets for a secondary battery with different numbers of annular recesses at the front and back surfaces of the sealants.
FIG. 7A is a cross-sectional view of an example gasket for a secondary battery when compressed, and FIG. 7B is an enlarged partial cross-sectional view of FIG. 7A.
FIG. 8 is a cross-sectional view of a gasket for a secondary battery according to a second embodiment.
FIG. 9 is a cross-sectional view of a gasket for a secondary battery according to a third embodiment.
FIG. 10 is a cross-sectional view of known gaskets for a secondary battery.
FIG. 11 is a cross-sectional view describing an issue with known gaskets for a secondary battery.

### DETAILED DESCRIPTION

Embodiments of the present invention will now be described below with reference to the drawings.

### First Embodiment

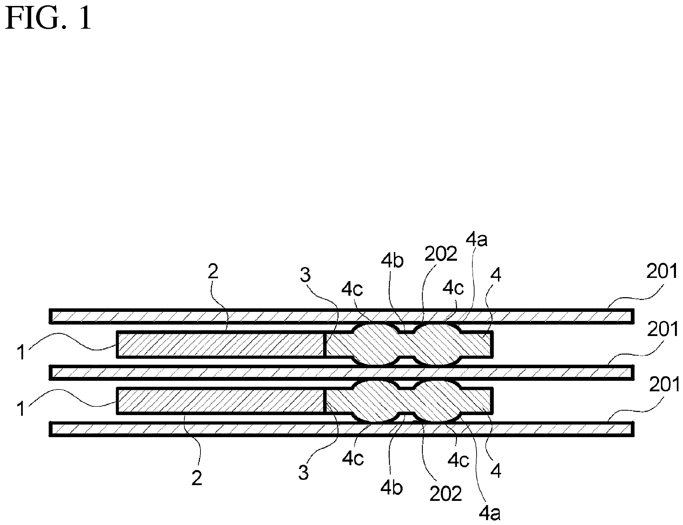

FIG. 1 is a cross-sectional view of gaskets for a secondary battery according to a first embodiment. Although the figures herein show one to five gaskets 1 for a secondary battery, more gaskets 1 for a secondary battery are actually stacked on one another. In the figures, the middle portions of the stack members 201 and frames 2 are on the right, and the peripheries of the stack members 201 and the frames 2 are on the left.

As shown in FIG. 1, a stacked secondary battery including many cell stacks on one another includes gaskets 1 for a secondary battery to seal between the flat stack members 201 in each cell stack at the peripheries of the stack members 201. The stack members 201 include a positive electrode plate, a negative electrode plate, and a separator placed between the electrode plates. The separator is, for example, a microporous film.

The spaces between the electrode plates and the separator are filled with an active material.

Each gasket 1 for a secondary battery includes a flat frame 2 and an annular sealant 4. The frame 2 is shaped to extend along a sealing target portion 202 of the stack member 201 at the periphery. The sealant 4 is bonded to a sealing edge (inner periphery) 3 of the frame 2. The frame 2 is formed from a hard material. The frame 2 is preferably formed from a metal, a synthetic resin, a fiber reinforced synthetic resin, or fiber reinforced rubber. The sealant 4 is formed from an elastic material, such as rubber, or a synthetic rubber material (a low-hardness material). The sealant 4 is bonded to the frame 2 by, for example, integral vulcanization molding.

The gasket 1 for a secondary battery includes the frame 2, and is easily attachable. The frame 2 can hold the sealant 4 at the initial accurate positions, and reduce misalignment of the sealing surfaces of the stack members 201 stacked on one another when the sealant 4 is compressed. This structure allows the stack members 201 to be less likely to bend, and thus can provide appropriate tightening margins.

The sealant 4 includes an annular sealing bead 4a. The sealing bead 4a extends along the entire length of the sealing edge 3, and has a thickness greater than the interval between two adjacent stack members 201. The sealing bead 4a is an annular ridge on each of the front and back surfaces of the sealant 4.

The sealing bead 4a includes at least one annular recess 4b extending along the entire length of the sealing edge 3. In the present embodiment, a single annular recess 4b is formed on each of the front and back surfaces of the sealant 4. The annular recesses 4b on the front and back surfaces of the sealant 4 have the same shape and are located opposite to each other across the sealant 4.

Each annular recess 4b in the sealing bead 4a defines two seal parts 4c with the annular recess 4b between them.

The sealing bead 4a and the annular recesses 4b are formed integrally with the sealant 4 in a rubber mold when the frame 2 and the sealant 4 are formed by integral vulcanization molding.

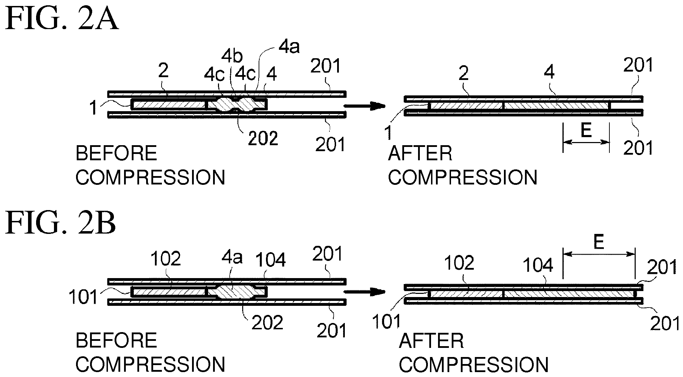

FIGs. 2A and 2B are cross-sectional views showing a comparison between the gasket for a secondary battery according to the first embodiment and a known gasket for a secondary battery.

As shown in FIG. 2A, the sealing bead 4a is compressed when the frame 2 of the first embodiment is placed between two adjacent stack members 201, thus sealing between the stack members 201 at the sealing target portions 202. The compressed sealing bead 4a increases the sealing width as indicated by an arrow E.

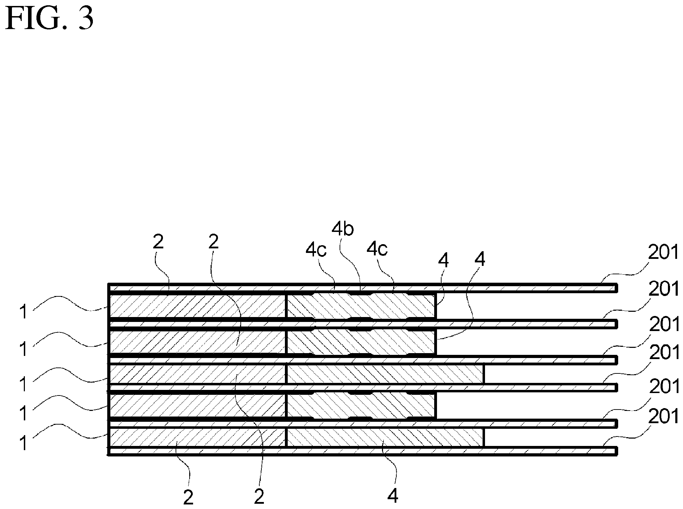

FIG. 3 is a cross-sectional view of the gaskets for a secondary battery according to the first embodiment in use.

As shown in FIG. 3, in the present embodiment, the sealing bead 4a includes the annular recesses 4b. This structure increases the contact area of the seal, allowing the stack members 201 at varying intervals and thus with unstable tightening margins to have appropriate sealing surfaces and to achieve stable sealing performance.

The structure according to the present embodiment in FIG. 2A including the sealing bead 4a with the annular recesses 4b is filled with less rubber material than the known gasket 101 for a secondary battery shown in FIG. 2B that simply includes a single bead 4a elongated horizontally and having no annular recess 4b. As indicated by the arrow E, the gasket 1 according to the present embodiment minimizes the decrease in the effective areas of the stack members 201 resulting from the increase in the sealing width when the sealing beads 4a are compressed.

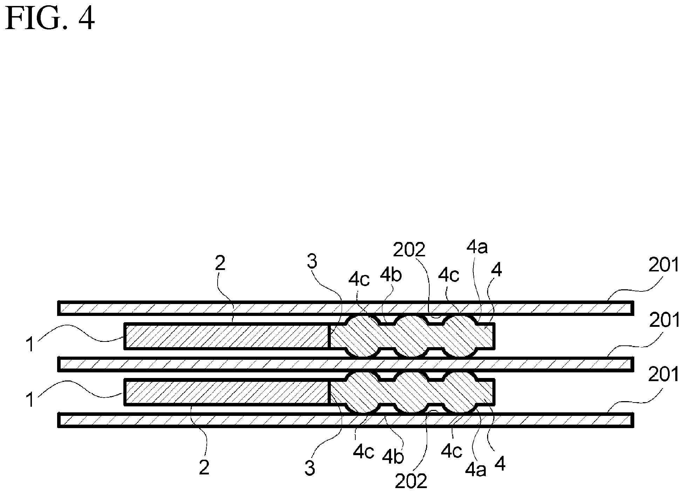

FIG. 4 is a cross-sectional view of gaskets for a secondary battery with two annular recesses.

As shown in FIG. 4, three seal parts 4c may be defined to have each of the two annular recesses 4b between them. This structure is filled with less rubber material than the structure including a single annular recess 4b, and thus further reduces the increase in the sealing width when the sealing beads 4a are compressed.

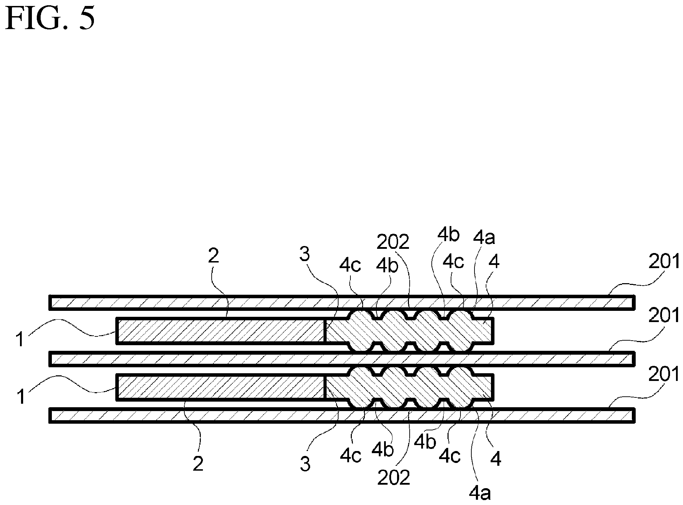

FIG. 5 is a cross-sectional view of gaskets for a secondary battery with three annular recesses.

As shown in FIG. 5, four or more seal parts 4c may be defined to have each of three or more annular recesses 4b between them. This structure is filled with less rubber material than the structure including two annular recesses 4b, and thus further reduces the increase in the sealing width when the sealing beads 4a are compressed.

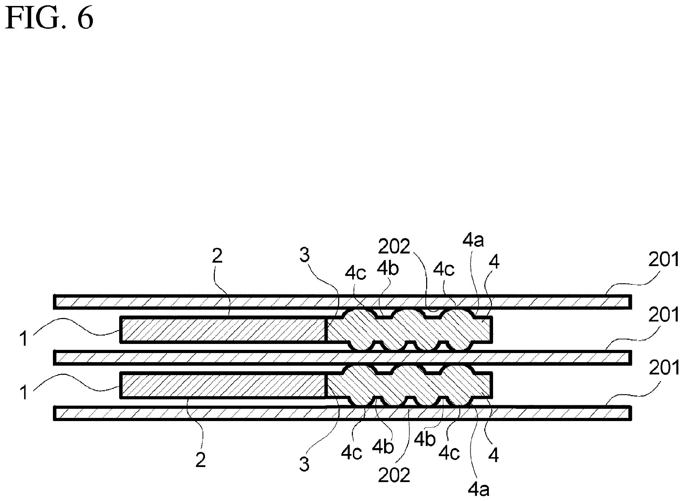

FIG. 6 is a cross-sectional view of gaskets for a secondary battery with different numbers of annular recesses on the front and back surfaces of the sealants.

When two or more annular recesses 4b are formed, different numbers of annular recesses 4b may be formed on the front and back surfaces of the sealant 4. As shown in FIG. 6, for example, the front surface of the sealant 4 may have two annular recesses 4b, and the back surface of the sealant 4 may have three annular recesses 4b. When the same number of annular recesses 4b are formed on each of the front and back surfaces of the sealant 4, the annular recesses 4b on the respective surfaces may be at different positions or in different shapes.

The annular recesses 4b varying in their number, positions, or shapes between the front and back surfaces of the sealant 4 provide the front and back surfaces of the sealant 4 with different appropriate seal pressures. This structure accommodates asymmetry (such as curvature) between the front and back surfaces of the stack members 201.

### Second Embodiment

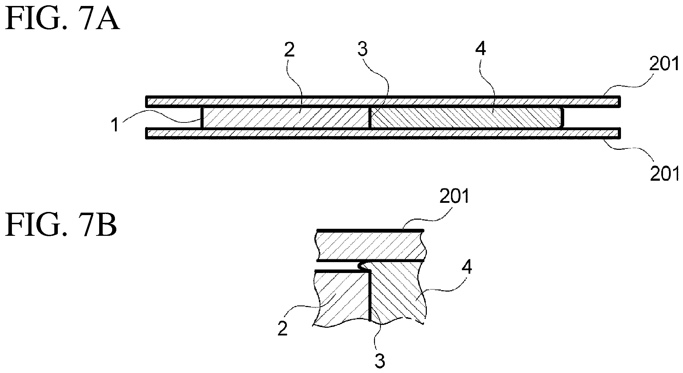

FIG. 7A is a cross-sectional view of an example compressed gasket for a secondary battery, and FIG. 7B is an enlarged partial cross-sectional view of FIG. 7A.

When a sealant 4 of a gasket 1 for a secondary battery is compressed, a portion of the sealant 4 (near a sealing edge 3) may deform and be placed between the frame 2 and the stack member 201, as shown in FIG. 7B. In this case, the sealant 4 cannot be compressed to a predetermined thickness.

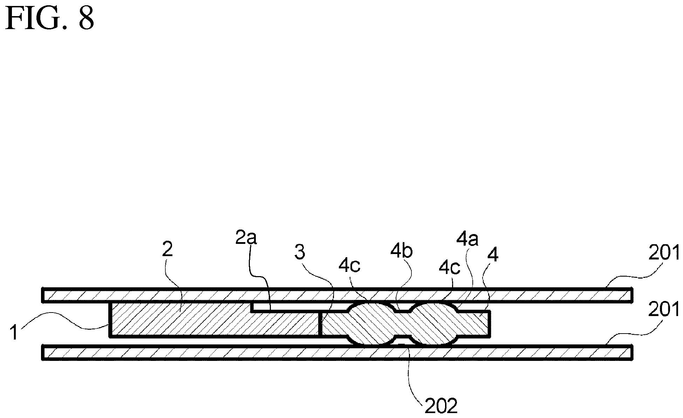

FIG. 8 is a cross-sectional view of a gasket for a secondary battery according to a second embodiment. The same components as those described in the first embodiment will not be described.

A frame 2 in the present embodiment includes a recess 2a on its surface near the sealing edge 3. The recess 2a extends along the entire length of the sealing edge 3. The frame 2 including the recess 2a has a thickness near the sealing edge 3 smaller than the interval between the adjacent stack members 201 when the sealing beads 4a are compressed.

The thinner portion near the sealing edge 3 forms a space between the portion near the sealing edge 3 and the stack member 201. This prevents a portion of the sealant 4 from being placed between the frame 2 and the stack member 201. This allows the sealant 4 to be compressed to a predetermined thickness. The stack members 201 can thus have appropriate sealing surfaces and achieve stable sealing performance.

The recess 2a is formed by, for example, squeezing the frame 2 in a rubber mold when the frame 2 and the sealant 4 are formed by integral vulcanization molding. In this manner, the recess 2a can be easily formed on the frame 2.

### Third Embodiment

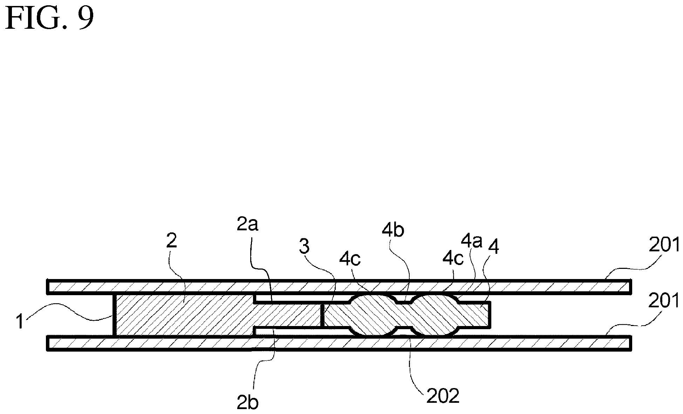

FIG. 9 is a cross-sectional view of a gasket for a secondary battery according to a third embodiment. The same components as those described in the first or second embodiment will not be described.

A frame 2 in the present embodiment includes recesses 2a and 2b formed on each of the front and back surfaces of the frame 2 near the sealing edge 3. The frame 2 including the recesses 2a and 2b has a thickness near the sealing edge 3 smaller than the interval between the adjacent stack members 201 when the sealing beads 4a are compressed.

The thinner portion near the sealing edge 3 forms spaces between the portions near the sealing edge 3 and the stack members 201 on both the front and back surfaces of the frame 2. This prevents a portion of the sealant 4 from being placed between the frame 2 and the stack members 201. This allows the sealant 4 to be compressed to a predetermined thickness. The stack members 201 can thus have appropriate sealing surfaces and achieve stable sealing performance.

The recesses 2a and 2b are formed by, for example, squeezing the frame 2 in a rubber mold when the frame 2 and the sealant 4 are formed by integral vulcanization molding. In this manner, the recesses 2a and 2b can be easily formed on the frame 2.

### Reference Signs List

- 1: gasket for secondary battery
- 2: frame
- 2a, 2b: recess
- 3: sealing edge
- 4: sealant
- 4a: sealing bead
- 4b: annular recess
- 4c: seal part
- 201: stack member
- 202: sealing target portion

## Claims

1. A gasket for a secondary battery placeable between stack members of a secondary battery, the gasket comprising:
a flat frame shaped to extend along sealing target portions on peripheries of the stack members; and
an annular sealant bonded to a sealing edge of the frame, the annular sealant being made of elastic material, the annular sealant including an annular sealing bead extending along an entire length of the sealing edge and having a thickness greater than an interval between adjacent ones of the stack members, the sealing bead having at least one annular recess along the entire length of the sealing edge.

2. The gasket for a secondary battery according to claim 1, wherein
the sealing bead includes at least two annular recesses.

3. The gasket for a secondary battery according to claim 1 or claim 2, wherein
the frame includes a recess on one surface of the sealing edge.

4. The gasket for a secondary battery according to claim 1 or claim 2, wherein
the frame includes a recess on each of two surfaces of the sealing edge.

5. The gasket for a secondary battery according to any one of claims 1 to 4, w
herein
the frame has a thickness at the sealing edge smaller than the interval between adjacent ones of the stack members.
